Europäisches Patentamt

European Patent Office

Office européen des brevets

(11) Veröffentlichungsnummer: **0 410 493 B1**

# EUROPÄISCHE PATENTSCHRIFT

(45) Veröffentlichungstag der Patentschrift: **10.05.95**

(51) Int. Cl.⁶: **B23H 11/00**, B23H 7/02

(21) Anmeldenummer: **90114530.0**

(22) Anmeldetag: **28.07.90**

(54) **Drahtschneide-Funkenerosionsmaschine mit feststehendem Maschinentisch.**

(30) Priorität: **28.07.89 DE 3925009**

(43) Veröffentlichungstag der Anmeldung:
**30.01.91 Patentblatt 91/05**

(45) Bekanntmachung des Hinweises auf die
Patenterteilung:
**10.05.95 Patentblatt 95/19**

(84) Benannte Vertragsstaaten:
**CH DE FR GB IT LI**

(56) Entgegenhaltungen:
**DE-C- 3 444 390**
**US-A- 4 565 915**

(73) Patentinhaber: **CHARMILLES TECHNOLOGIES S.A.**
**8-10, rue du Pré-de-la-Fontaine**
**Zone industrielle de Satigny**
**CH-1217 Meyrin 1 (CH)**

(72) Erfinder: **Popp, Konrad Josef**
**Ulmenweg 2**
**D-8903 Bobingen (DE)**
Erfinder: **Töpfer, Klaus**
**Im Espenloh 34**
**D-6087 Worfelden (DE)**

(74) Vertreter: **Hugelin, Christiane et al**
**c/o CHARMILLES TECHNOLOGIES SA**
**Case postale 373**
**CH-1217 Meyrin 1 (CH)**

EP 0 410 493 B1

**Beschreibung**

Die Erfindung bezieht sich auf eine Funkenerosionsmaschine für das Drahterodieren mit einer auf den feststehenden Maschinenbett angeordneten Behälterraum zur Aufnahme eines Dielektrikums und je einem aus dem Maschinenständer herausragenden in der X- und Y-Achse beweglich geführten, die obere und die untere Drahtführung enthaltenden Kragarm.

Eine gattungsgemäße Funkenerosionsmaschine für das Drahterodieren ist bekannt durch die EP 133 160. Bei der bekannten Maschine besteht der Behälterraum aus einem rechteckigen Tank mit vier feststehend auf einem Kreuztisch angeordneten Tankwänden, der mittels Servomotoren in den X- und Y-Achsen verschiebbar ist. Die dem Maschinenständer benachbarte rückwärtige Tankwand ist mit einem horizontal verlaufenden, abgedichteten schlitzartigen Durchbruch versehen, durch welchen der Kragarm mit der unteren Drahtführung in den Behälterraum hineinragt.

Die Abdichtung zwischen der feststehenden Behälterwand und eine Schiebeplatte, die den schlitzartigen, die Bewegung des unteren Kragarms in X-Richtung erlaubenden Durchbruch deckt, erfolgt durch eine Dichtung; in einer Variante befindet sich der untere Kragarm in einer Führungsbüchse, die zu seinen Vorschub in Y-Richtung dient und mit der Schiebeplatte eine Einheit bildet; die Abdichtung zwischen dem unteren Kragarm und der Büchse oder zwischem ihm und der Schiebeplatte erfolgt durch eine Dichtung.

Bei dieser gattungsgemäßen Bauweise einer derartigen Maschine ist es jedoch schwierig, das Werkstück in die Aufspannebene zu verbringen und dort zu befestigen. Dies geschieht zumeist in der Weise, daß die bedienerseitige vordere Wandfläche des Behälters durch Wegklappen oder Wegschieben während der Dauer des Werkstückaufspannens geöffnet werden kann. Trotzdem ist die Zugänglichkeit der Aufspannebene erschwert und behindert, so daß die Aufspannarbeit große Sorgfalt und Geschicklichkeit erfordert und dadurch einen großen Zeitaufwand bedingt.

Diese Arbeitsweise ist hinnehmbar, wenn bei einem Werkstückwechsel die Maschine ohnedies ganz außer Betrieb gesetzt und der Schneiddraht in die Startbohrung des neuen Werkstücks von Hand eingefädelt werden muß. Bei modernen Maschinen mit vollautomatischem Einfädelsystem ist zum Werkstückwechsel nur ein kurzfristiges Ablassen des Dielektrikums erforderlich. Dieser Zeitraum kann jedoch ganz wesentlich verkürzt werden, wenn zum Beschicken der Maschine mit den Werkstücken Werkstückpaletten oder dgl. Werkstückträger benutzt werden. Diese ermöglichen nicht nur einen raschen Werkstückwechsel, sondern sie gewährleisten auch das Aufspannen des Werkstückes in genau ausgerichteter Positionierung, so daß ein langwieriges und schwieriges Einrichten bzw. Justieren des Werkstückes entfällt.

Die Verwendung von Werkstückpaletten oder ogl. Werkstückträgern und deren Einsatz zum automatisch erfolgenden Werkstückwechsel mittels Manipulatoren oder Robotern läßt jedoch eine freie Zugänglichkeit der Aufspannebene der Maschine wünschenswert erscheinen. Aufgabe der Erfindung ist es daher, die bekannte Funkenerosionsmaschine in der Weise weiterzubilden, daß bei vorhandener Einfädelautomatik nur eine kurze Betriebsunterbrechung nötig ist, um einen Werkstückwechsel vorzunehmen. Dies wird erreicht durch die Merkmale des Anspruchs 1.

Dadurch wird zum Zuführen und Entnehmen der Werkstücke eine freie Zugänglichkeit der Aufspannebene geschaffen, und es ist ohne Schwierigkeiten möglich, den Werkstückwechsel zu automatisieren. Das Zuführen und Festspannen der Werkstücke und das Abspannen und Entnehmen nach durchgeführter Bearbeitung kann nun vollautomatisch erfolgen, so daß ein völlig unbeaufsichtigter Bearbeitungsablauf über mehrere Tage durchgeführt werden kann.

Der gleiche Vorteil des automatischen bedienerlosen Werkstückwechsels ist bei Senk-Erosionsmaschinen bekannt. Diese Möglichkeit auch bei Drahterodiermaschinen zu nutzen, war bisher nicht möglich und auch nicht erforderlich. Früher war es nämlich ohnehin erforderlich die Maschine abzustellen um den Schneiddraht einzufädeln.

Wie sich erwies, konnte man für Draht-Erodiermaschinen einen bekannten absenkbaren Arbeitsbehälter nach dem Prinzip der Arbeitsweise von Senkerodiermaschinen nicht einfach übernehmen. Es hat sich gezeigt, daß bei Draht-Erodiermaschinen die Forderung an eine einwandfreie, eigenvibrationslose Ausbildung und Bewegungsmeckanik der raumdimensionierten Wandungen des Arbeitsbehälters noch höher sind als dies schon bei Senk-Erosionsmaschinen der Fall ist.

Die Bearbeitungsgenauigkeit des Werkstücks hängt davon ab, daß während der gesamten Bearbeitungsphase, bei oft mehrfachem Wechsel der Schneiddrahtzuführung durch das Werkstück, keine vibrationsbedingte Änderung der Lage des Werkstückes und vor allein keine Übertragung von Schwingungen auf den Schneiddraht erfolgt. Der zwischen den Führungen freigespannte Schneiddraht ist sehr vibrationsempfindlich und muß daher von Resonanzschwingungen aus Maschinen-Eigenfrequenzen freigehalten werden. Mit welcher Problematik die Maschinensteifigkeit die Eigenfrequenzen der Maschinenbauteile und die relative Konstanz von beweglichen zu statischen Komponenten derart sensibler Maschinen in Bezug auf Bearbeitungsgenauigkeit sind, wird z. B. in der DE-PS 33 03 758 geschildert, obwohl es sich dabei um eine Senkerodiermaschine handelt. Bei Drahtschneidemaschinen ist die geschilderte Problematik um einiges höher angesiedelt.

Die EP 133 160 befaßt sich ebenfalls mit dem Arbeitsbehälter einer Drahtschneide-Funkenerosionsmaschine, insbesondere der Problematik der Abdichtung des Arbeitsbehälters in Bezug zum unteren Elektrodenarm der Maschine. Die in dieser Schrift vorgeschlagene Lösung ist irrelevant zur vorliegenden Erfindung, daß das Abdichtungsproblem bei der vorliegenden Erfindung in dieser Art auftritt. Der Arbeitsbehälter besteht integral aus einem vierseitigen Kasten und ist nicht absenkbar. Insofern besteht keine Möglichkeit des automatischen Werkzeugwechselns. Außerdem ist die Montage des Werkstücks innerhalb dem beengten Arbeitsbehälter äußerst hinderlich.

Eine weitere aufgabe der vorliegenden Erfindung ist es somit einen Arbeitsbehälter bei einer Drahtschneideerosionsmaschine zu finden, der so konstruiert ist, daß er mittels einem speziellen Arbeitssystem beliebig oft vibrationsfrei und ohne Beeinflussung des zu bearbeitenden Werkstücks, von einer Höhe, die genügend Schutz vor dem Verspritzen des Spülwassers bietet, bis zum Niveau unmittelbar unterhalb der Werkstückaufspannplatte, in vertikaler Richtung hin und her bewegt werden kann und an den Kontaktstellen zwischen statischen und bewegten Teilen gut abgedichtet ist.

Dies wird erreicht durch die Merkmale des Anspruchs 1.

Die folgenden Abbildungen veranschaulichen die vorliegende Erfindung beispielhaft.

Es zeigen:

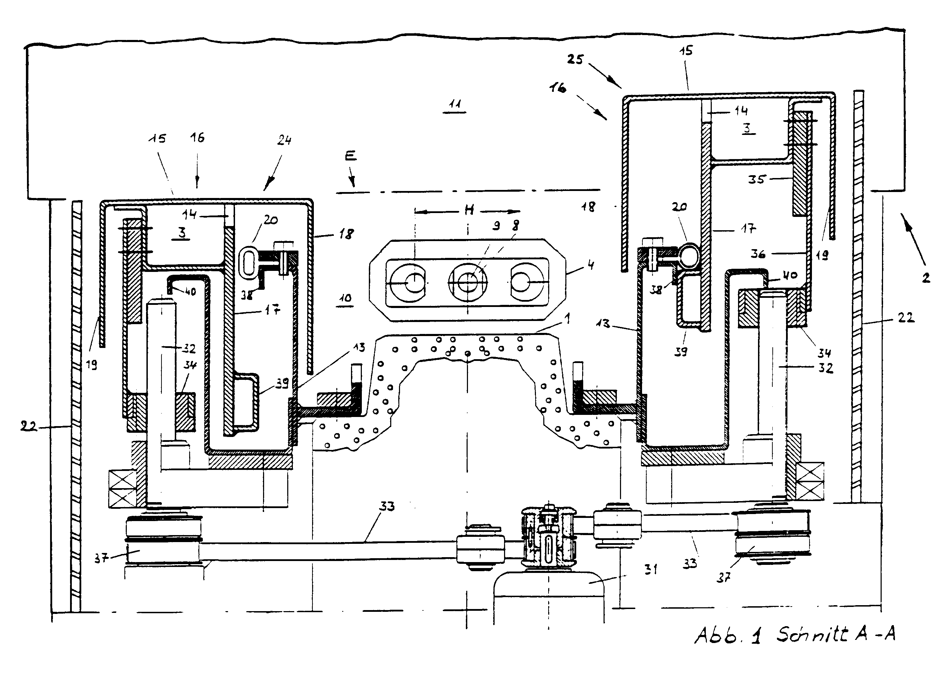

Abb. 1     einen Schnitt A-A der beweglichen Teile des Arbeitsbehälters der Funkenerosionsmaschine bestehend im wesentlichen aus der Dreiseitenhubtür 16, sowie der feststehenden Teile des Arbeitsbehälters bestehend im wesentlichen aus dem Maschinenbett 1, der Behälterrückwand 11 und der dreiseitigen Wand 13. Die linke Seite der Abbildung zeigt das System im abgesenkten Zustand (Ruhezustand) der beweglichen Dreiseitenhubtür 16, bei entspannter Blähdichtung 20. Die rechte Seite der Abbildung zeigt das System mit ausgefahrener Dreiseitenhubtür mit aufgeblähter Dichtung (Betriebszustand).

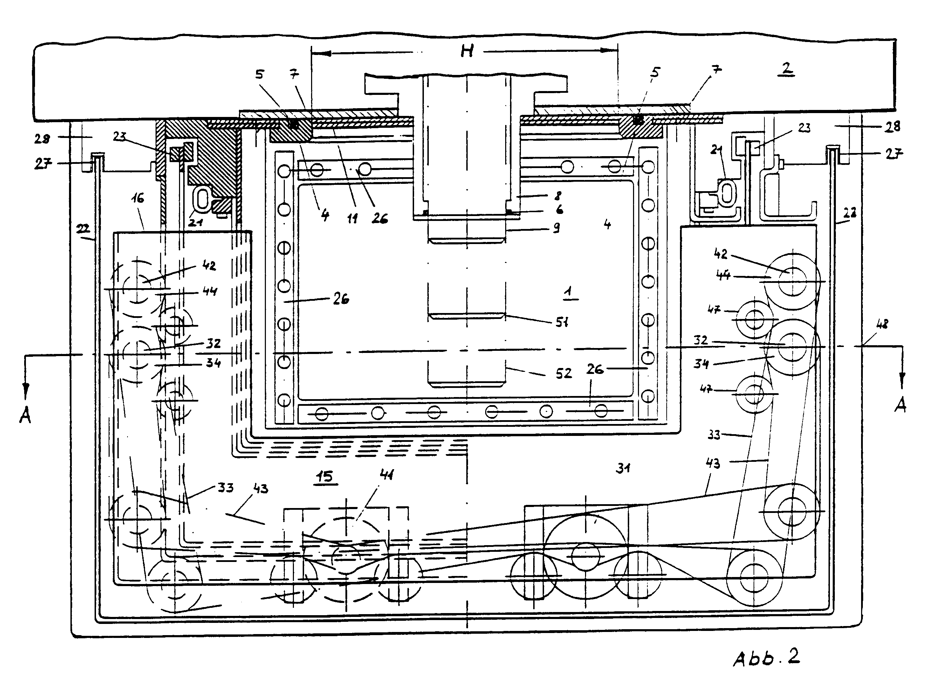

Abb. 2     eine Draufsicht auf die Maschine mit partiellem Horizontalschnitt zur Darstellung der Arbeitsbehälterrückwand mit dem Abdichtsystem 6 für den Drahtführrkragarm 9 in der Y-Achse, sowie der Kraggarmbewegung in der X-Achse integral mit der Schiebeplatte 7, mit dem Abdichtsystem 5. Desweiteren zeigt die rechte Abbildungsseite bei abgedecktem Teil des Dreiseitenhubbehälters das Antriebssystem zur Auf- und Abbewegung der Dreiseitenhubtür 16 und der Berührschutzwandung 22, jeweils integrall über einen Motor 31 bzw. 41 angetrieben.

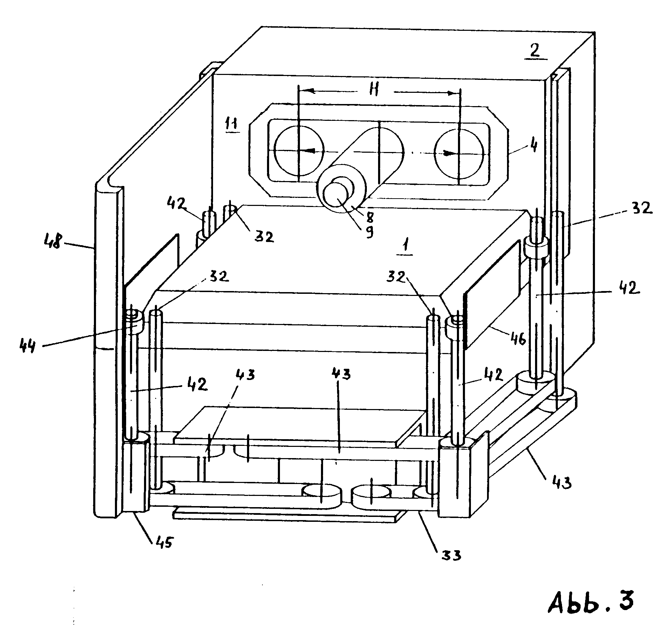

Abb. 3     eine perspektivistische Darstellung der integralen Antriebssysteme, jeweils für die Dreiseitenhubtür und die Berührschutzwand, sowie des Kragarms 9 mit der Kragarmbüchse 8 und dem Hubbereich H des Kragarms in der X-Achse.

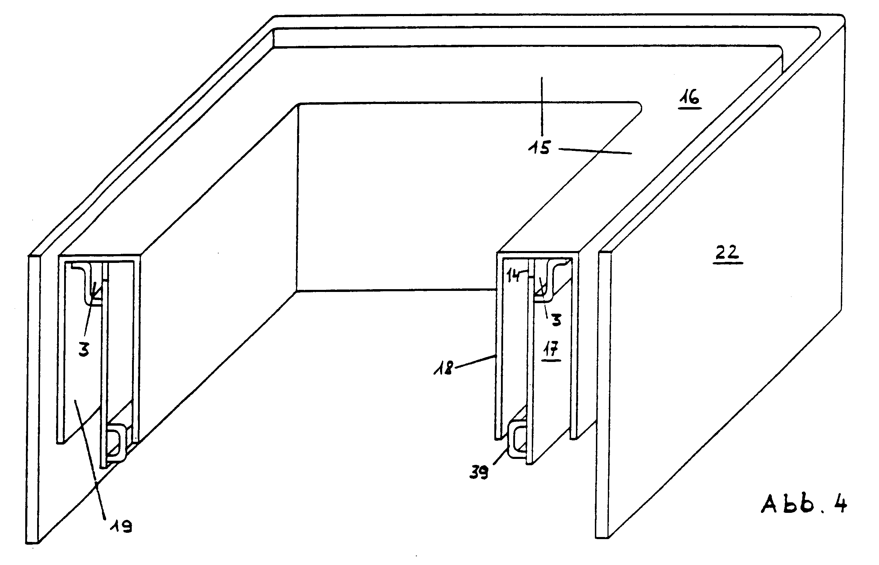

Abb. 4     eine perspektivistische Darstellung der dreiwandigen Dreiseitenhubtür 16 und der Berührschutzwandung 22. Durch diese Darstellung wird insbesondere die stabile und demzufolge vibrationsarme Arbeitsweise der Hubwand bei der Auf- und Abbewegung verständlich. Deutlich wird auch insbesondere die Tischform der Oberseite der Hubtür 16 gezeigt. Neben der bequemen Arbeitsweise mit dieser Behälterform wird die Arbeitssicherheit erheblich verbessert. Da keine scharfkantigen Wände vorhanden sind und da die Wände auf der Oberseite mit der Schutzauflagefläche 15 geschlossen sind, wird z. B. das Hereinfallen von unerwünschten Gegenständen in den Arbeitsbehälter zumindest stark verringert.

Im Detail zeigt die Abb. 1, als Vertikalschnitt A-A der Abb. 2 den Aufbau des Behälterraums 10, der durch die Hauptbestandteile, der auf- und abbewegbaren Dreiseitenhubtür 16, der feststehenden Behälterrückwand 11, sowie des feststehenden Maschinenbetts 1 mit der dreiseitigen Wand 13 abgegrenzt wird. Durch die Zweiteilung des Schnitts A-A in einem Zustand der abgesenkten Dreiseitenhubtür 24 - linke Seite der Abb. 1 - die den Behälterraum im abgesenkten Ruhezustand zeigt und einem Zustand der ausgefahrenen Dreiseitenhubtür 25 - rechte Seite der Abb. 1 - die den Behälterraum im Arbeitszustand zeigt, wird der Funktionsmechanismus dieses Maschinenbereichs demonstriert.

Im Ruhezustand ist die Blähdichtung 20 entspannt, die Gewindespindelmutter 34 befindet sich auf Tiefstniveau und die Schutzauflagefläche 15 der Dreiseitenhubtür befindet sich dicht unterhalb der Werkstückaufspannebene E. Es besteht freier Zugang von drei Seiten zur Werkstückaufspannebene und somit die Möglichkeit des manuellen oder automatischen Aufspannens bzw. Wechsels eines oder mehrerer Werkstücke ohne irgendwelche Behinderung durch Behälterraumbegrenzungen.

Nach dem Aufspannen des oder der Werkstücke wird die Blähdichtung 20 durch Eindrücken von Pressluft gespannt, wodurch eine Abdichtung zwischen dem Arretieranschlag 38 der dreiseitigen feststehenden Wand 13, und der glatten Gleitfläche des beweglichen Elements 17 erfolgt. Der Behälterraum 10 wird nun mit Dielektrolytflüssigkeit befüllt, wodurch sich das Flüssigkeitsniveau durch den Dielektrolytüberlauf 14 einstellt. Mittels dem Motor 31, über die Antriebsriemen 33, die Umlenkköpfe 37 und Gewindespindeln 32 wird die Auf-und Abhubbewegung auf die Gewindespindelmutter und über die Verbindungselemente 35, 36 auf die Dreiseitenhubtür 16 übertragen.

Die Abbildung zeigt deutlich, daß nur ein einziger Motor die gesamten Traktionselemente antreibt.

Das bewirkt eine exakte Synchronisation der Bewegungsabläufe in Bezug auf die Dreiseitenhubtürbewegung.

In Abhängigkeit von der Dreiseitenhubtürgröße sind zuweilen vier und mehr Spindelköpfe erforderlich. Auch dann wird ein synchroner und insbesondere niveaugleicher Auf- und Abbewegungsablauf der Dreiseitenhubtür garantiert. Auch nur ein minimales Verkanten während dem Bewegungsablauf würde zur Blockierung und damit einer markanten Störung im Arbeitsablauf führen.

Das Spindelsystem bei der Übertragung des Auf- und Abbewegungshubs auf die Dreiseitenhubtür hat vor allem den Vorteil, daß in Abhängigkeit vom Gewindemodul der Spindel ein auch langsamer Vorschub möglich ist. Insbesondere jedoch ist damit der Vorschub sehr vibrationsarm und in jeder Position arretierbar. Im obersten Niveau des Arbeitszustandes, rastet der Arretier- und Abdichtsockel 39 des beweglichen Wandelements 17 in den Arretieranschlag 38 der dreiseitigen feststehenden Wand 13 ein und stabilisiert damit diese Arbeitsposition in der Vertikalrichtung.

Durch das Kontraarretierprofil 40, das an die Gewindespindelmutteroberkante anschlägt, erfolgt die entsprechende Stabilsierung der Dreiseitenhubtür in der Horizontalrichtung. Hinzu kommt eine verbesserte Abdichtkontaktfläche der Blähdichtung 20, die nun nach drei Seiten hin Flächenkontakt hat.

Die beiden beweglichen Wandelemente 18 und 19 der Dreiseitenhubtür 16 erfüllen Mehrfachfunktionen und zwar, wirken sie stabilisierend und damit vibrationsmindernd auf die integrierte Dreiseitenstatik der Hubtür, bilden das Wandelement 18 gleichzeitig eine innere Schutzwand und das Wandelement 19 eine äussere Schutzwand und im Verbund mit der Schutzauflagefläche 15 erfolgt eine weitere Stabilisierung der Hubtür 16.

Die Dreiseitenhubtür 16 besitzt mit der Dielektrolytüberlaufrinne 3 als verdeckte Innenkonstruktion einen weiteren Vorteil. Der Dielektrolytüberlauf ist nämlich arbeitsschutzfreundlich total abgedeckt. Desweiteren stabilisiert die Überlaufrinne noch die Gesamtkonstruktion der Dreiseitenhubtür.

Die neue Dreiseitenhubtür stellt eine äussert eindrucksvoll durchdachte Konstruktion dar, und besitzt neben der sehr wichtigen statischen Ausgestaltung noch die Vorzüge der arbeitsschutzfreundlichen, verdeckten Dielektrolytabteilung, die von zwei Schutzwänden, von in jeder Arbeitsposition und der obersten Arbeitspositionstufe möglichen Arretierbarkeit, mit Kontraaretierung in der Arbeitspostionsoberstufe und einer bedienungsfreunlichen Schutzauflagefläche 15, bei exakter Abdichtung der bewegten und der feststehenden Teile des Behälterraums im Arbeitszustand.

Position 22 zeigt die äussere Berührungsschutzwandung, die dem Arbeitsschutz dient.

In den Behälterraum 10 ragt der untere Kragarm 9 herein, der die Drahtzu- bzw. abführung stützt, in Abhängigkeit davon ob die Arbeitsweise von oben nach unten oder umgekehrt abläuft. Der Kragarm befindet sich in einer Führungsbüchse 8, für den Kragarmvorschub in der Y-Achse. Der Kragarm mit der Büchse bewegt sich horizontal innerhalb der Abgrenzung des Dichtrahmens 4.

Der Bewegungshub für den Kragarm 9 in der X-Achse ist mit H gekennzeichnet.

In Abb. 2 werden insbesondere die Bewegungen des Kragarms 9 in den Achsrichtungen X und Y demonstriert.

In Richtung der X-Achse bewegt sich der Kragarm 9 mit Büchse 8 in einem Bereich H, der durch den Dichtrahmen 4 begrenzt wird. Der Kragarm mit der Büchse ist mit der Schiebeplatte 7 dicht verbunden und bilden während der Bewegung in der X-Achse eine Einheit.

Die Abdichtung zur Dielektrolytflüssigkeit des Behälteraums 10 erfolgt hierbei durch die Dichtung 5. Die Bewegung des Kragarms in Richtung der Y-Achse wird durch zwei Vorschubpositionierungen demonstriert. Die Abdichtung zur Dielektrolytflüssigkeit des Behälterraums erfolgt über die Dichtung 6.

Weiter wird die Prismenführung 23 für die Mittelwand 17 der Dreiseitenhubtür 16 gezeigt, sowie der Vertikalteil der Blähdichtung 21 für die Behälterabdichtung.

Der Aufspannrahmen 26 dient der Befestigung der zu bearbeitenden Werkstücke. Die Berührschutzwandung 22 besteht ebenfalls aus einem Stück, ist als Dreiseitenwand ausgebildet und wird nach dem gleichen Antriebsprinzip wie die Dreiseitenhubtür auf- und abbewegt, wobei die Vertikalführung mittels der Vertikalgleitfuge 27 im Maschinenständervorstoß 28 erfolgt.

Deutlich sichtbar ist die breite Schutzauflagefläche 15.

Die perspektivische Darstellung der Abb. 3 soll vor allem nochmal das integrale Antriebssystem für die Dreiseitenhubtür 16 mit den Gewindespindeln 32 und der Berührschutzwand 22 mit den Gewindespindeln 42 veranschaulichen.

4

In der perspektivischen Darstellung der Dreiseitenhubtür 16 der Abb. 4 kommen nochmal alle Attribute dieser Konstruktion zum Vorschein, insbesondere die Schutzauflagefläche 15, die Elektrolytüberlaufrinne 3, der Arretier- und Abdichtsockel 39, der Dielektrolytüberlauf 14, wobei mit 3 und 39 die versteifende und damit stabilisierende Wirkung auf die Konstruktion sichtbar wird.

Die Erfindung ist natürlich nicht auf die beispielhaften Darstellungen der Abb. 1 - 4 begrenzt.

| AKTE – CASE | STICHWORT – key-word | | BEZUGS–ZEICHEN–LISTE B1. | |
|---|---|---|---|---|
| 4376 EP | DSM–Behälter | | ANMELDER Nassovia GmbH | |
| POS. | BENENNUNG / DESIGNATION | POS. | BENENNUNG / DESIGNATION | |
| 1 | Maschinenbett | 59 | | |
| 2 | Maschinenständer | 60 | | |
| 3 | Dielektrolytüberlaufrinne | 61 | | |
| 4 | Dichtrahmen | 62 | | |
| 5 | Dichtung f. Schiebeplatte | 63 | | |
| 6 | Dichtungspackung | 64 | | |
| 7 | Schiebeplatte | 65 | | |
| 8 | Führungsbüchse | 66 | | |
| 9 | Kragarm | 67 | | |
| 10 | Behälterraum | 68 | | |
| 11 | Behälterrückwand | 69 | | |
| 12 | Abdichtung | 70 | | |
| 13 | Dreiseitige Wand | 71 | | |
| 14 | Dieletkrolytüberlauf | 72 | | |
| 15 | Schutzauflagefläche | 73 | | |
| 16 | Dreiseitenhubtür | 74 | | |
| 17 | Bewegliches Wandelement | 75 | | |
| 18 | Bewegliches Wandelement | 76 | | |
| 19 | Bewegliches Wandelement | 77 | | |
| 20 | Blähdichtung | 78 | | |
| 21 | Blähdichtung | 79 | | |
| 22 | Berührschutzwandung | 80 | | |
| 23 | Führungsprismen | 81 | | |
| 24 | Dreiseitenhubtür abges. | 82 | | |
| 25 | Dreiseitenhubtür ausgef. | 83 | | |
| 26 | Aufspannrahmen | 84 | | |
| 27 | Vertikalgleitfuge | 85 | | |
| 28 | Maschinenständervorstoss | 86 | | |
| 29 | | 87 | | |
| 30 | | 88 | | |
| 31 | Motor für 16 | 89 | | |
| 32 | Gewindespindel für 16 | 90 | | |
| 33 | Ketten o. Zahnriemen f.16 | 91 | | |
| 34 | Gewindespindelmutter f.16 | 92 | | |
| 35 | Verbindungselement für 16 | 93 | | |
| 36 | Verbindungselement für 16 | 94 | | |
| 37 | Riemenumlenkkopf für 16 | 95 | | |
| 38 | Arretieranschlag | 96 | | |
| 39 | Arretier- u.Abdichtsockel | 97 | | |
| 40 | Kontraaretierprofil | 98 | | |
| 41 | Motor für 22 | 99 | | |
| 42 | Gewindespindel für 22 | | | |
| 43 | Ketten o. Zahnriemen f.22 | | | |
| 44 | Gewindespindelmutter f.22 | E | Werkstückaufspann-Ebene | |
| 45 | Verbindungselement für 22 | H | Bewegungshub f. Kragarm | |
| 46 | Verbindungselement für 22 | | | |
| 47 | Spannrollen | | | |
| 48 | Maschinenverkleidung | | | |
| 49 | | | | |
| 50 | | | | |
| 51 | Vorschubpositionierung | | | |
| 52 | Vorschubpositionierung | | | |
| 53 | | | | |
| 54 | | | | |
| 55 | | | | |
| 56 | | | | |
| 57 | | | | |
| 58 | | | | |

**Patentansprüche**

1. Funkenerosionsmaschine für das Drahterodieren mit
    a) einem Maschinenbett (1) und einem Maschinenständer (2),
    b) einem auf dem Maschinenbett (1) angeordneten Behälterraum (10) zur Aufnahme einer Arbeitsflüssigkeit mit einer das zu bearbeitende Werkstück um einen Mindestbetrag übersteigenden Füllhöhe,
    c) einem aus dem Maschinenständer (2) herausragenden, in der X- und Y-Achse beweglich geführten, die obere Drahtführung enthaltenden Kragarm,
    d) einem aus dem Maschinenständer (2) herausragenden, die untere Drahtführung enthaltenden Kragarm (9), der eine Wand (11) des Arbeitsbehälters über einem schlitzartigen, von einer gegenüber der Wand (11) abgedichteten Schiebeplatte (7) verdeckten Durchbruch durchquert, wobei dieser Kragarm (9) durch diesen schlitzartigen Durchbruch im Wand (11) in der X-Richtung und durch eine abgedichtete, in dieser Schiebeplatte (7) gestaltete Führung (8) in der Y-Richtung beweglich ist, dadurch gekennzeichnet,
    e) dass der Behälterwand (11) fest steht, dass eine an ihm abgedichtet anschliessbare Dreiseitenhubtür (16) bis unter die Werkstückaufspann-Ebene (E) absenkbar ist, den Behälterraum (10) von drei Seiten umschliesst, aus einer oder mehreren Wandelemente (17) besteht und gegenüber feststehenden Teilen des Arbeitsbehälters abgedichtet beweglich geführt wird,
    f) und dass diese Dreiseitenhubtür (16) aus wenigstens einer weiteren, auf Ihrer Innenseite in einem Abstand umgebenden, in die Arbeitsflüssigkeit eintauchenden, dreiseitigen Schutzwand (18) besteht.

2. Maschine nach Anspruch 1, dadurch gekennzeichnet, dass die bewegliche Dreiseitenhubtür (16) ein einteiliges Wandelement (17) aufweist.

3. Maschine nach Anspruch 1, dadurch gekennzeichnet, dass die Dreiseitenhubtür (16) gegenüber dem Maschinenbett (1) abgedichtet beweglich geführt wird, wobei das Maschinenbett (1) ein feststehendes Teil des Arbeitsbehälters ist indem es seinen Boden bildet.

4. Maschine nach Anspruch 1, dadurch gekennzeichnet, dass die Dreiseitenhubtür (16) mit einer weiteren, sie auf der Aussenseite in einem Abstand umgebenden, äusseren Schutzwand (19) versehen ist.

5. Maschine nach Anspruch 1, dadurch gekennzeichnet, dass die Dreiseitenhubtür (16) mittels Blädichtungen (20, 21) abgedichtet ist, die an der feststehenden Behälterwand (11) und an einer am Maschinenbett (1) angeschlossenen, dreiseitigen Dichtwand (13) befestigt sind.

6. Maschine nach Ansprüche 1 und 3 bis 5, dadurch gekennzeichnet, dass das Wandelement (17), die Schutzwand (18) und das äussere Schutzwand (19) mit ihren Oberkanten an eine horizontale, in der Draufsicht U-förmige Schutzauflagefläche (15) angeschlossen sind.

7. Maschine nach Anspruch 1, dadurch gekennzeichnet dass die Dreiseitenhubtür (16) zwischen ihrer abgesenkten und der höchsten Hublage in beliebigen Zwischenstellungen arretierbar ist.

8. Maschine nach Anspruch 1, dadurch gekennzeichnet dass die Dreiseitenhubtür (16) von einer heb- und senkbar geführten Berührungsschutzwandung (22) allseitig in einem Abstand umgeben ist.

9. Maschine nach Anspruch 1, dadurch gekennzeichnet, dass die in der Schiebeplatte (7) gestaltete Führung (8) in der sich der untere Kragarm (9) in der Y-Richtung bewegt, eine mit dieser Schiebeplatte (7) flüssigkeitsdicht verbundene Büchse ist.

10. Maschine nach Anspruch 9, dadurch gekennzeichnet, daß der Kragarm (9) in der Büchse (8) mittels Ringdichtungspackungen (6) abgedichtet ist.

11. Maschine nach Anspruch 9, dadurch gekennzeichnet, daß an der feststehenden Behälterwand (11) ein Dichtrahmen (4) angeordnet ist, der die Büchse (8) und deren Bewegungshub (H) umgibt und gegen welchen die Schiebeplatte (7) angedrückt und durch die Dichtung (5) abgedichtet ist.

**EP 0 410 493 B1**

**12.** Maschine nach Anspruch 11, dadurch gekennzeichnet, daß der Dichtrahmen (4) an der feststehenden Behälterwand (11) angeschlossen ist.

**13.** Maschine nach Anspruch 1, dadurch gekennzeichnet, daß als Antrieb für das Heben und Senken der Dreiseitenhubtür (16) wenigstens ein Motor (31) mit rotierendem Abtrieb vorgesehen ist, der eine Anzahl von vertikal angeordneten Gewindespindeln (32) über Ketten oder Zahnriemen (33) antreibt, deren Spindelmuttern (34) durch Verbindungselemente (35, 36) an Wandflächenteile der Dreiseitenhubtür (16) angeschlossen sind.

**14.** Maschine nach Anspruch 1, dadurch gekennzeichnet, daß die Dreiseitenhubtür (16) in einer prismenähnlichen Gleitführung (23) verschiebbar ist, die an der feststehenden Behälterwand (11) und/oder am Maschinenständer (1) angeordnet ist.

**15.** Maschine nach Anspruch 8, dadurch gekennzeichnet, daß als Antrieb für das Heben und Senken der Berührschutzwandung (22) wenigstens ein Motor (41) mit rotierendem Abtrieb vorgesehen ist, der eine Anzahl von vertikal angeordneten Gewindespindeln (42) über Ketten oder Zahnriemen (43) antreibt, deren Spindelmuttern (44) durch Verbindungselemente (45, 46) an die Berührschutzwandung (22) angeschlossen ist.

**Claims**

**1.** Machine for electrical discharges machining with a wire-electrode with
   a) a machine bed (1) and a machine frame (2)
   b) a location (10) for a tank set out on the machine bed (1) for receiving a machining liquid at a filling height exceeding the workpiece to be machined with a minimum value,
   c) a cantilever arm, projecting out the machine frame (2), driven so as to move according the axis X and Y and provided with the upper wire guide,
   d) a cantilever arm (9), projecting out the machine frame (2), provided with the lower wire guide and going across a wall (11) of the work tank through a slot-shaped opening covered by a sliding plate (7) which is leant in a tight manner against the wall (11), whereas this cantilever arm (9) can move in the X-direction through this slot-shaped opening in the wall (11), and in the Y-direction through a tightened guiding (8) provided in this sliding plate (7), characterised in that
   e) the wall (11) of the tank is stationary, a lifting door in three sides (16), which can be tightly linked up with the wall (11), can be lowered up to below the clamping level (E) of the workpiece, surrounds on three sides the location (10) for the tank , is constituted by one or several wall elements (17) and is driven so as to move in a tight manner against stationary parts of the work tank,
   f) and in that this lifting door in three sides (16) comprises further at least one protecting wall (18) in three sides which is set on its inside, at an interval, and which is dipping in the machining liquid.

**2.** Machine according to claim 1, characterised in that the lifting door in three sides (16) comprises a wall element (17) made of one piece only.

**3.** Machine according to claim 1, characterised in that the lifting door in three sides (16) is driven so as to move in a tight manner against the machine bed (1), whereas the machine bed (1) is a stationary part of the work tank since it constitutes its bottom.

**4.** Machine according to claim 1, characterised in that the lifting door in three sides (16) is provided with a further protecting wall (19) set on its outside, at an interval.

**5.** Machine according to claim 1, characterised in that the lifting door in three sides (16) is sealed with swelling packings (20, 21) which are fastened to the stationary tankwall (11) and to a sealing wall (13) in three sides, bound to the machine bed (1).

**6.** Machine according to claims 1 and 3 to 5, characterised in that the wall element (17), the protecting wall (18) and the external protecting wall (19) are bound with their upper edges to an horizontal bearing surface (15) U-shaped when viewed from above.

7

7.  Machine according to claim 1, characterised in that the lifting door in three sides (16) is lockable at any intermediary position between its dropped and lifted positions.

8.  Machine according to claim 1, characterised in that the lifting door in three sides (16) is surrounded on all sides, with an intervall, by a contact-proof wall (22) which can be lifted and dropped.

9.  Machine according to claim 1 , characterised in that the guiding (8) provided in the sliding plate (7) in which the lower cantilever arm (9) is moving in the Y-direction, is a case bound in a liquid-proof manner to this sliding plate (7).

10. Machine according to claim 9 , characterised in that the cantilever arm (9) is tightened in the guiding (8) by ring-shaped packings (6).

11. Machine according to claim 9 , characterised in that the stationary tankwall (11) is provided with a tightening frame (4) which surrounds the guiding (8) and its stroke (H) and against which the sliding plate (7), the tightening being provided by the seal (5).

12. Machine according to claim 11 , characterised in that the tightening frame (4) is fastened to the stationary tankwall (11).

13. Machine according to claim 1 , characterised in that at least one motor (31) with rotary motion is provided for driving the lifting and dropping of the lifting door in three sides (16), by operating, thanks to chains or toothed belts (33), a number of vertical threaded spindles (32) with nuts (34) which are bound to parts of the surface of the lifting door in three sides (16) by liaison elements (35, 36).

14. Machine according to claim 1, characterised in that the lifting door in three sides (16) is able to slide in a sliding groove (23) shaped like a prism and which is bound to the stationary tankwall (11) qand/or to the frame (2) of the machine.

15. Machine according to claim 8, characterised in that at least one motor (41) with rotary motion is provided for driving the lifting and dropping of the contact-proof wall (22), by operating, thanks to chains or toothed belts (43), a number of vertical threaded spindles (42) with nuts (44) which are bound to the contact-proof wall (22) by liaison elements (45, 46).

**Revendications**

1.  Machine d'électroérosion à fil-électrode comprenant
    a) une assise (1) de machine et un bâti (2) de machine,
    b) un emplacement (10) pour un bac, disposé sur l'assise (1) de machine, pour contenir un liquide d'usinage jusqu'à un niveau de remplissage surpassant d'une quantité minimum la pièce à usiner,
    c) un bras en porte à faux saillant du bâti (2) de machine, guidé pour se déplacer selon les axes X et Y et portant le guide-fil supérieur,
    d) un bras en porte à faux (9), saillant du bâti (2) de machine, portant le guide-fil inférieur et traversant l'une des parois (11) d'un bac de travail par une percée en forme de fente recouverte d'une plaque coulissante (7) s'appuyant de façon étanche à la paroi (11), tandis que ce bras en porte à faux (9) est mobile selon la direction X à travers cette percée en forme de fente pratiquée dans la paroi (11) et mobile selon la direction Y à travers un guidage étanche (8) ménagé dans cette plaque coulissante (7),
    caractérisée en ce que
    e) la paroi du bac (11) est fixe, une porte relevable à trois côtés (16) reliable de manière étanche à cette paroi (11) est abaissable jusqu'en-dessous du plan (E) de bridage de la pièce à usiner, entoure sur trois côtés l'emplacement (10) pour le bac, est constituée par un ou plusieurs éléments de paroi (17) et est guidée pour se déplacer de manière étanche le long de parties fixes du bac de travail,
    f) et en ce que cette porte relevable à trois côtés (16) comporte de plus au moins une paroi de protection (18) à trois côtés, qui entoure sa face interne en ménageant un intervalle et plonge dans le liquide d'usinage.

**2.** Machine selon la revendication 1, caractérisée par le fait que la porte relevable à trois côtés (16) comporte un élément de paroi (17) d'une seule pièce.

**3.** Machine selon la revendication 1, caractérisée par le fait que la porte relevable à trois côtés (16) est guidée pour se déplacer de manière étanche le long de l'assise (1) de la machine, tandis que l'assise (1) de la machine est une partie fixe du bac de travail car elle constitue son fond.

**4.** Machine selon la revendication 1, caractérisée par le fait que la porte relevable à trois côtés (16) comporte de plus une paroi de protection (19), qui entoure sa face externe en ménageant un intervalle.

**5.** Machine selon la revendication 1, caractérisée par le fait que la porte relevable à trois côtés (16) est rendue étanche par des jointe gonflables (20, 21) qui sont fixés à la paroi fixe (11) du bac et à une paroi d'étanchéité (13) à trois côtés raccordée à l'assise (1) de la machine.

**6.** Machine selon les revendications 1 et 3 à 5, caractérisée par le fait que l'élément de paroi (17), la paroi de protection (18) et la paroi de protection externe (19) sont reliés par leur arête supérieure à une surface d'appui horizontale de protection, en forme de U en vue plongeante.

**7.** Machine selon la revendication 1, caractérisée par le fait que la porte relevable à trois côtés (16) est bloquable dans une position intermédiaire quelconque entre sa position abaissée et sa position relevée la plus haute.

**8.** Machine selon la revendication 1, caractérisée par le fait que la porte relevable à trois côtés (16) est entourée de tous côtés, en ménageant un intervalle, par une paroi anti-contact (22) qui peut être relevée et abaissée.

**9.** Machine selon la revendication 1, caractérisée par le fait que le guidage étanche (8) ménagé dans la plaque coulissante (7), dans lequel le bras en porte à faux (9) est mobile selon la direction Y, est une gaine raccordée de manière étanche aux liquides à cette plaque coulissante (7).

**10.** Machine selon la revendication 9, caractérisée par le fait que le bras en porte à faux (9) est monté de manière étanche dans le guidage (8) grâce à des joints annulaires (6).

**11.** Machine selon la revendication 9, caractérisée par le fait que la paroi fixe (11) du bac est munie d'un cadre d'étanchéité (4) qui entoure le guidage (8) et sa course (H) et contre lequel est pressée la plaque coulissante (7), l'étanchéité étant assurée par le joint (5).

**12.** Machine selon la revendication 11, caractérisée par le fait que le cadre d'étanchéité (4) est fixé à la paroi fixe (11) du bac.

**13.** Machine selon la revendication 1, caractérisée par le fait qu'au moins un moteur (31) à mouvement rotatif est prévu pour commander la montée et la descente de la porte relevable à trois côtés (16), qui actionne, grâce à des chaines ou des courroies dentées (33), de nombreuses broches filetées (32) verticales dont les écrous (34) sont fixés à des parties de la surface de la porte relevable à trois côtés (16) par des éléments de liaison (35, 36).

**14.** Machine selon la revendication 1, caractérisée par le fait que la porte relevable à trois côtés (16) peut coulisser dans une glissière (23) prismatique qui est montée sur la paroi fixe (11) du bac et/ou au bâti (2) de la machine.

**15.** Machine selon la revendication 8, caractérisée par le fait qu'au moins un moteur (41) à mouvement rotatif est prévu pour commander la montée et la descente de la paroi anti-contact (22), qui actionne, grâce à des chaines ou des courroies dentées (43), de nombreuses broches filetées (42) verticales dont les écrous (44) sont fixés à la paroi anti-contact (22) par des éléments de liaison (45, 46).

Abb. 1 Schnitt A-A

Abb. 2

EP 0 410 493 B1

Abb. 3

Abb. 4

EP 0 410 493 B1